Europäisches Patentamt

European Patent Office

Office européen des brevets

(11) Veröffentlichungsnummer: **0 052 249**
**B1**

(12) **EUROPÄISCHE PATENTSCHRIFT**

(45) Veröffentlichungstag der Patentschrift:
13.02.85

(51) Int. Cl.4: **F 03 D 11/00,** F 16 F 15/02

(21) Anmeldenummer: 81108613.1

(22) Anmeldetag: **21.10.81**

(54) **Drehpositionierbare Anlage.**

(30) Priorität: **19.11.80 DE 3043611**

(43) Veröffentlichungstag der Anmeldung:
**26.05.82 Patentblatt 82/21**

(45) Bekanntmachung des Hinweises auf die Patenterteilung:
**13.02.85 Patentblatt 85/7**

(84) Benannte Vertragsstaaten:
**FR GB NL SE**

(56) Entgegenhaltungen:
**BE - A - 454 206
DE - C - 877 280
DE - C - 973 999
FR - A - 2 325 823**

*"Konstruktionselemente des Maschinenbaues"* von
**Tochtermann/Bodenstein Teil 2, 9. Aufl. S.1821, Springer
Verlag 1979**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Kulinyak, Ernst, Ing. grad.,
Krankenhausweg 10, D-8206 Bruckmühl (DE)**

BUNDESDRUCKEREI BERLIN

## Beschreibung

Die Erfindung bezieht sich auf eine drehpositionierbare Anlage nach dem Oberbegriff eines der Patentansprüche 1, 3 oder 5.

Es ist bekannt (»Konstruktionselemente des Maschinenbaues« Teil 2, Seiten 18—21, 9. Auflage, 1979, Springer, Berlin; Verfasser: Tochtermann/Bodenstein), daß das dynamische Verhalten und insbesondere die Eigenfrequenz von Wellen durch eine Änderung der Drehmassen oder der Torsionsfederkonstante der elastischen Wellenstücke beeinflußt werden kann, wobei die Torsionsfederkonstante ihrerseits von dem polaren Flächenträgheitsmoment, dem Gleitmodul und der Länge des elastischen Wellenstükkes abhängig ist.

Weiterhin ist eine Windkraftmaschine bekannt (DE-C-877 280), deren Windradwelle in Form eines oder mehrerer Stabfedern derart elastisch und nachgiebig ausgebildet ist, daß die kritische Drehzahl wesentlich unter der Betriebsdrehzahl des Windrades liegt.

Bei drehpositionierbaren Anlagen, insbesondere Windenergieanlagen der beanspruchten Art treten nun zusätzlich Schwingungsprobleme um die Hochachse (Gieren) auf. Derartige Windenergieanlagen werden zur Erzeugung von elektrischem Strom mit beträchtlichen Abmessungen, z. B. einem Turm von ca. 120 m Höhe und 3,5 m Durchmesser aus Stahlbeton und einem Rotor von 145 m Durchmesser, für eine elektrische Nennleistung von 5 MW und mit einer beträchtlichen Lebensdauer von mehr als 20 Jahren projektiert, wobei der Turm über eine voll durchdrehbare Drehverbindung einen Geräteträger in Form einer Gondel mit einer tragenden Struktur, einem Gehäuse und Einbauten, wie einem elektrischen Generator und dgl., trägt und die Gondel ihrerseits den Rotor lagert. Diese Drehverbindung ist Bestandteil einer gondelfesten Antriebseinheit, die über ein (oder mehrere) Ritzel mit einem turmfesten Zahnkranz in Eingriff steht, um so die Gondel im Betrieb relativ zum Turm um die Hochachse zu verdrehen, damit der Rotor den wechselnden Windrichtungen nachgeführt werden kann.

Um eine Lose, d. h. ein Umkehrspiel, zu verhindern, kann die Antriebseinheit zwei in der Gondel angeordnete Antriebe besitzen, die gegeneinander verspannt sind, wobei die beiden Antriebe zwei identische, mehrstufige Planetengetriebe in Triebstockanordnung aufweisen.

Derartige Windenergieanlagen bilden nun ein aus Turm, Geräteträger und Antriebseinheit bestehendes Schwingungssystem, das vor allem vom Rotor, etwa in Folge wechselnder Windkräfte, erregt wird. Um jedoch eine Zerstörung oder Beschädigung der Windenergieanlage zu verhindern, müssen die Gier-Eigenfrequenzen der Windenergieanlage ausreichend von den Erregerfrequenzen beabstandet sein. Diese Eigenfrequenzen sind jedoch bei Entwurf und Bau der Windenergieanlage nicht genau beherrschbar, d. h. die nach dem Aufbauen der Anlage gemessenen Gier-Eigenfrequenzen weichen vom theoretisch berechneten Wert ab, weshalb eine nachträgliche Einstellung der Gier-Eigenfrequenz vorgenommen werden muß. Zu diesem Zweck wurden bisher Zusatzmassen in der Gondel mit möglichst großem Abstand von der Turmachse eingebaut, die aber zugleich zu einer unerwünschten Erhöhung der vom Turm getragenen Masse und damit einer Erniedrigung der Biege-Eigenfrequenz der Anlage führen, was dann seinerseits — soweit wie möglich — korrigiert werden muß.

Ähnliche Schwierigkeiten wie bei Windenergieanlagen treten allgemein bei allen drehpositionierbaren Großanlagen auf, z. B. bei Radioteleskop- oder Spiegelantennenanlagen, insbesondere wenn diese eine Triebstock- oder Verspann-Antriebseinheit enthalten.

Aufgabe der Erfindung ist es, bei einer drehpositionierbaren Anlage der beanspruchten Art die Einstellung der Gier-Eigenfrequenz einfach sowohl im baulichen als auch im Handhabungsaufwand zu gestalten.

Erfindungsgemäße Lösungen dieser Aufgabe sind in den Patentansprüchen 1, 3, 5 gekennzeichnet.

Erfindungsgemäß wird die Einstellung der Gier-Eigenfrequenz massenunabhängig, d. h. ohne gesonderte Zusatzmassen, also durch bloße Einstellbarkeit erreicht, wobei die hierzu erforderliche Veränderung der jeweiligen Federhärte äußerst einfach und zudem stufenlos, also besonders genau, ausführbar ist.

Im einzelnen wird nach der ersten Variante der Erfindung durch eine Relativverschiebung einer Getriebewelle der Antriebseinheit und eines mit der Getriebewelle drehfest verbundenen Getriebeelements, nämlich eines mit der turmfesten Verzahnung kämmenden Ritzels, die Länge des auf Torsion beanspruchten Wellenabschnitts verändert und dadurch eine Einstellung der Gier-Eigenfrequenz der gesamten Anlage bewirkt, wobei gemäß Anspruch 2 die gesamte Antriebseinheit einschließlich der Getriebewelle in Richtung der Hochachse verstellbar am Geräteträger befestigt und das Ritzel unabhängig von der Getriebewelle am Geräteträger in Richtung der Hochachse unverschiebbar gelagert ist, wodurch eine Abstützung des Ritzels über die Getriebewelle entfällt und deren auf Torsion beanspruchter Wellenabschnitt im Hinblick auf eine hohe Gier-Eigenfrequenz sehr kurz eingestellt werden kann.

Bei der zweiten Variante der Erfindung nach den Ansprüchen 3 und 4 erfolgt die Einstellung der Gier-Eigenfrequenz in der Weise, daß die Getriebewelle aus zwei teleskopartig ineinander greifenden Wellenteilen mit veränderlich wählbarer Lage und/oder Länge ihres gegenseitigen, drehfesten Eingriffs besteht, wobei die Wellenteile gemäß Anspruch 4 zweckmäßigerweise unterschiedliche Torsionssteifigkeiten haben und durch in Wellenachsrichtung verschiebliche Koppelungselemente, nämlich Klemmringe, drehfest miteinander verbunden sind, was den Vorteil hat, daß die Frequenzeinstellung ohne Verschiebung der relativ schweren Antriebseinheit vorgenommen werden kann.

Die dritte Lösungsvariante (Ansprüche 5—7), die wahlweise zu, gemäß Anspruch 8 vorzugsweise aber in Kombination mit den beiden ersten Ausführungsformen der Erfindung angewendet wird, ist gegenwärtig am meisten bevorzugt, weil sie auf besonders einfache Weise, nämlich entweder durch Verstellen gemäß Anspruch 6 oder durch Auswechseln gemäß Anspruch 7 eines oder mehrerer, im Zuge des zwischen Turm und Geräteträger wirksamen Antriebs kraftübertragend angeordneter Federelemente eine stufenlose und genaue Einstellung der Gier-Eigenfrequenz der Anlage ermöglicht.

Anhand der Zeichnung wird die Erfindung beispielsweise näher erläutert. Es zeigt

Fig. 1 eine schematische Seitenansicht einer drehpositionierbaren Anlage in Form einer Windenergieanlage; und

Fig. 2—4 drei verschiedene Ausführungsformen der Windenergieanlage gemäß Fig. 1, jeweils in Seitenansicht, teilweise im Schnitt, wobei Fig. 4 zusätzlich einen Horizontalschnitt A-A enthält.

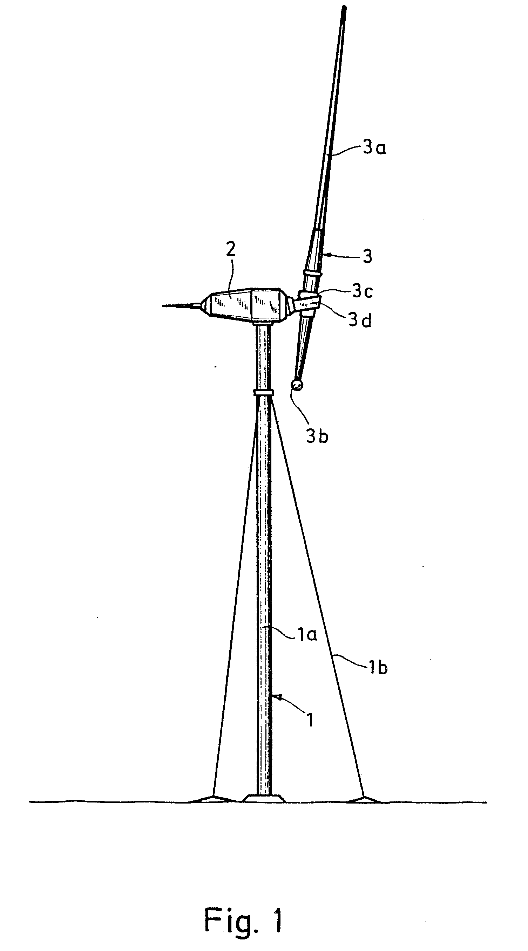

Fig. 1 zeigt eine Windenergieanlage mit einem Turm 1, der aus einer Struktur 1a und einem Seilwerk 1b besteht, einer vom Turm 1 getragenen Gondel 2 als Geräteträger mit insbesondere folgenden (nicht näher dargestellten) Baugruppen: elektrischem Generator, Gondelstruktur, Azimut-Lager und Antriebseinheit, Ballast, und einem Rotor 3 mit einem Blatt 3a, einem Gegengewicht 3b und einer Nabe 3c einschließlich einer (angedeuteten) Gabel 3d.

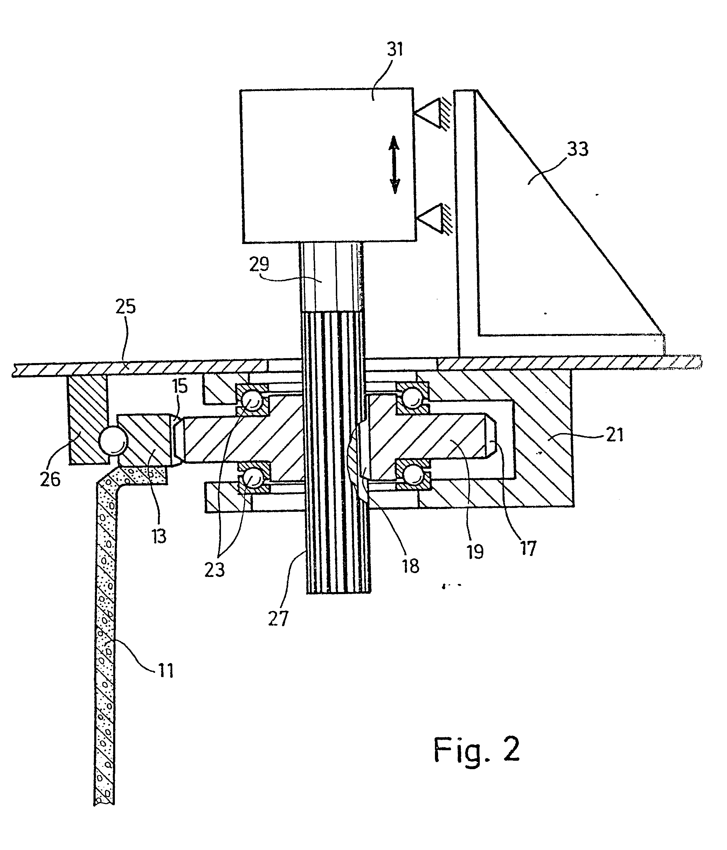

Fig. 2 zeigt eine erste Ausführungsform der Windenergieanlage:

Eine Seitenwand 11 des Turms 1 stützt an ihrem oberen Ende die auszugsweise dargestellte Gondel ab. Zu diesem Zweck ist ein turmfester Ring 13 (dessen rechte Schnittfläche ebenso wie der rechte Abschnitt der Wand 11 nicht gezeigt ist) mit einer Verzahnung 15 vorgesehen, die mit der entsprechenden Verzahnung 17 eines Ritzels 19 kämmt.

Das Ritzel 19 ist in einem Lagerbock 21 mit Lagern 23, der an einem Gondelboden 25 ortsfest gesichert ist, gelagert.

Eine innere Verzahnung 18 des Ritzels 19 bildet einen Schiebesitz mit einer zugeordneten Verzahnung 27 einer Abtriebswelle 29, die von einem Untersetzungswellengetriebe ausgeht, das zusammen mit einem Stell-Motor eine nur schematisch angedeutete, mit ihrem Gehäuse gezeigte Antriebseinheit 31 bildet.

Die Antriebseinheit 31 ist vertikal verschieblich von einem Auflagerbock 33 getragen, der seinerseits mit dem Gondelboden 25 fest verbunden ist. Diese vertikale Verschieblichkeit oder Höheneinstellbarkeit ist durch einen Doppelpfeil der Antriebseinheit 31 angedeutet. Die höheneinstellbare, jedoch drehfeste Verbindung zwischen der Antriebseinheit 31 und dem Auflagerbock 33 kann z. B. als Langloch-Schraubverbindung ausgelegt sein, wie Fig. 2 schematisch andeutet.

Im übrigen ist der Gondelboden 25 durch ein Azimut-Lager 26 am turmfesten Ring 13 abgestützt.

Die Einstellung der Torsions-Federhärte der Antriebseinheit, d. h. aller nicht zum Turm und zur Gondel gehörenden Teile von Fig. 2, erfolgt durch Höheneinstellung der Antriebseinheit 31.

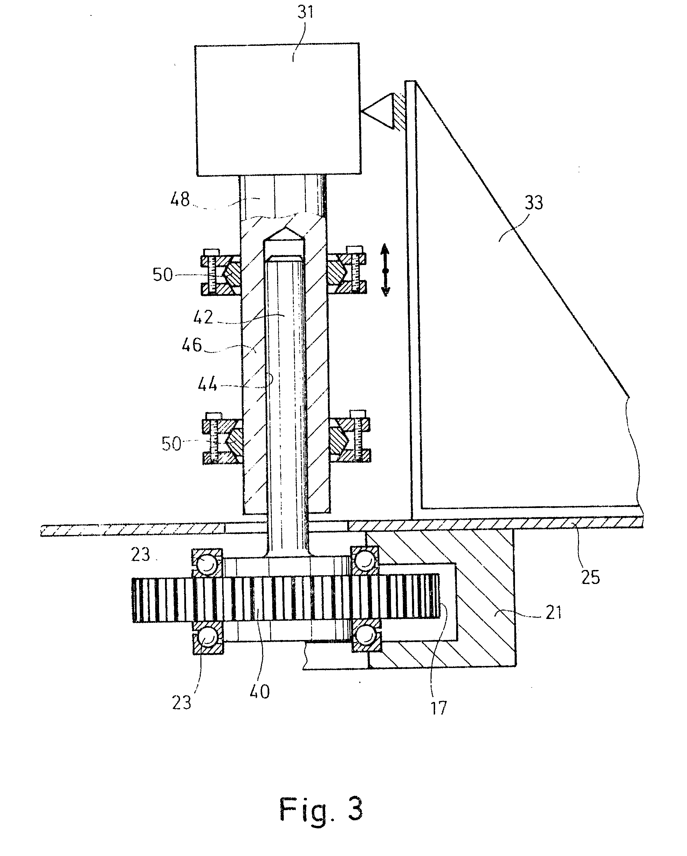

Fig. 3 zeigt eine zweite Ausführungsform der Windenergieanlage und ist gegenüber Fig. 2 insoweit vereinfacht, als die Teile 11, 13 und 26 weggelassen, also an sich in Fig. 3 hinzuzudenken sind. Soweit in Fig. 3 mit Fig. 2 übereinstimmende Bezugszeichen verwendet sind, entsprechen sich auch die betreffenden Teile.

Ein Ritzel 40 geht in eine Ritzelwelle 42 über, die in die mittige Bohrung 44 einer steifen Hohlwelle 46 als unteres Ende der Abtriebswelle 48 eingeschoben ist.

Die Ritzelwelle 42 und die Hohlwelle 46 der Abtriebswelle 48 sind durch verschiebbare Klemmringe 50 verbunden, die in Höhe des Endes der Ritzelwelle 42 und des Endes der Hohlwelle 46 vorgesehen sind. Der Aufbau der Klemmringe 50 ist in Fig. 3 schematisch angedeutet.

Da die Antriebseinheit 31 fest am Auflagerbock 33 gesichert ist (wie ebenfalls schematisch angedeutet), erfolgt bei dieser Ausführungsform die Einstellung der Torsions-Federhärte durch Verschieben der Klemmringe 50 auf der Hohlwelle 46 (vgl. auch den Doppelpfeil).

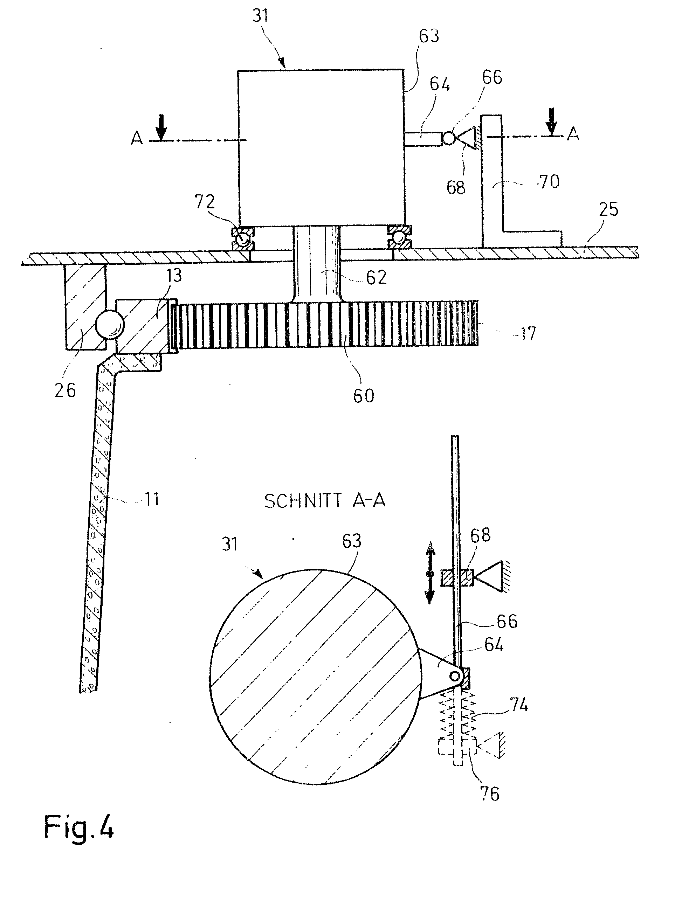

Fig. 4 zeigt eine dritte Ausführungsform der Windenergieanlage, wobei mit der Ausführungsform von Fig. 2 übereinstimmende Teile die gleichen Bezugszeichen wie in Fig. 2 tragen.

Ein Ritzel 60 ist fest mit der Abtriebswelle 62 der Antriebseinheit 31 verbunden. Dagegen ist das Gehäuse 63 der Antriebseinheit 31 über einstellbare Verbindungselemente mit der Gondel bzw. dem Gondelboden 25 verbunden, wie am deutlichsten aus dem Schnitt A-A ersichtlich ist. Zu diesem Zweck ist an einer Nase 64 des Gehäuses 63 der Antriebseinheit 31 eine Zugstange 66 angelenkt, die ihrerseits durch eine Klemmvorrichtung 68 hindurchgeführt ist. Die Klemmvorrichtung 68 ist von einem Bock 70 getragen, der auf dem Gondelboden 25 ruht.

Die Antriebseinheit 31 ist auf dem Gondelboden 25 abgestützt mittels eines Dreh-Lagers 72.

Anstelle der Zugstange 66 kann auch eine auswechselbare Federung 74, insbesondere aus Teller-Federn, vorgesehen sein, die an einem festen Anschlag 76 am Bock 70 abgestützt ist.

Die Klemmvorrichtung 68 arbeitet im Reibschluß und kann z. B. durch eine Schrumpfscheibe, ein Ringfederelement oder dgl. gebildet sein.

Die Verschieblichkeit der Klemmvorrichtung 68 (vgl. den Doppelpfeil im Schnitt A-A von Fig. 4) läßt sich z. B. durch ihr Verschieben in einem Langloch am Bock 70 erzielen, um dadurch die Länge der Zugstange 66 und somit deren Federhärte zu verändern.

Auf diese Weise kann mit sehr geringem baulichen Aufwand und sehr geringer Massen-Bewegung (die Masse der Klemmvorrichtung bzw. der auswechselbaren Federn kann praktisch vernachlässigt werden) wirksam die Torsions-Federhärte der Verbindung zwischen der Antriebseinheit 31 und dem Turm 1 bzw. der eigentlichen Gondel 2, die hier im wesentlichen nur durch den Gondelboden 25 angedeutet ist, verändert werden.

Es sei noch darauf hingewiesen, daß bei Ausbildung der Antriebseinheit als Verspann-Antriebseinheit die in Fig. 2—4 abgebildeten Antriebseinheiten jeweils doppelt vorhanden sind, und zwar hintereinander in azimutaler Richtung am Turm-Umfang angeordnet und miteinander in für sich bekannter Weise verbunden, um die angestrebte Verspannung zu erzielen, die die Drehpositionier-Genauigkeit erhöht.

## Patentansprüche

1. Drehpositionierbare Anlage, insbesondere Windenergieanlage, mit einem Turm (1) und einem um dessen Hochachse drehbar auf diesem gelagerten, mittels einer Antriebseinheit (31) drehpositionierbaren Geräteträger (Gondel 2), wobei die Antriebseinheit ein Wellengetriebe (13, 19, 29) enthält und Turm, Geräteträger und Antriebseinheit ein Schwingungssystem mit mindestens einer Gier-Eigenfrequenz (Drehschwingungen um die Hochachse) bilden, das von einem auf den Geräteträger veränderlich wirkenden Moment um die Hochachse angeregt wird, dadurch gekennzeichnet, daß zur Einstellung der Gier-Eigenfrequenz mindestens eine Getriebewelle (29) mit einstellbarer Torsionsfederhärte derart vorgesehen ist, daß die Länge der Welle zwischen Krafteinleitung und Kraftausleitung durch gegenseitige relative Verschiebbarkeit von Welle (29) und einem darauf drehfest angeordneten Getriebeelement (Ritzel 19) veränderbar ist.

2. Drehpositionierbare Anlage nach Anspruch 1, dadurch gekennzeichnet, daß die Antriebseinheit (31) gemeinsam mit der Getriebewelle (29) am Geräteträger (2) höheneinstellbar befestigt und das Getriebeelement (19) in Richtung der Hochachse am Geräteträger (2) fest gelagert und mit der Getriebewelle (29) in Wellenachsrichtung verschieblich verzahnt ist.

3. Drehpositionierbare Anlage, insbesondere Windenergieanlage, mit einem Turm (1) und einem um dessen Hochachse drehbar auf diesem gelagerten, mittels einer Antriebseinheit (31) drehpositionierbaren Geräteträger (Gondel 2), wobei die Antriebseinheit ein Wellengetriebe (40, 48) enthält und Turm, Geräteträger und Antriebseinheit ein Schwingungssystem mit mindestens einer Gier-Eigenfrequenz (Drehschwingungen um die Hochachse) bilden, das von einem auf den Geräteträger veränderlich wirkenden Moment um die Hochachse angeregt wird, dadurch gekennzeichnet, daß zur Einstellung der Gier-Eigenfrequenz mindestens eine Getriebewelle (48) mit einstellbarer Torsionsfederhärte derart vorgesehen ist, daß die Welle zwei teleskopartige ineinandergreifende Wellenteile (42, 46) aufweist, deren mindestens eine Stelle (Klemmring 50) gegenseitiger, drehfester Koppelung in Wellenachsrichtung wählbar ist.

4. Drehpositionierbare Anlage nach Anspruch 3, dadurch gekennzeichnet, daß die beiden Wellenteile (42, 46) unterschiedliche Torsionssteifigkeiten aufweisen und durch mindestens ein in Wellenachsrichtung verschieblich angeordnetes Koppelungselement (50) drehfest miteinander verbunden sind.

5. Drehpositionierbare Anlage, insbesondere Windenergieanlage, mit einem Turm (1) und einem um dessen Hochachse drehbar auf diesem gelagerten, mittels einer Antriebseinheit (31) drehpositionierbaren Geräteträger (Gondel 2), wobei Turm, Geräteträger und Antriebseinheit ein Schwingungssystem mit mindestens einer Gier-Eigenfrequenz (Drehschwingungen um die Hochachse) bilden, das von einem auf den Geräteträger veränderlich wirkenden Moment um die Hochachse angeregt wird, dadurch gekennzeichnet, daß zur Einstellung der Gier-Eigenfrequenz mindestens ein Kraftübertragungselement (Gehäuse 63) der Antriebseinheit (31) über mindestens ein Federelement (66, 74) veränderlich einstellbarer Federhärte in Richtung der über das Kraftübertragungselement abgeleiteten Reaktionskraft am Geräteträger (2) oder Turm (1) nachgiebig abgestützt ist.

6. Drehpositionierbare Anlage nach Anspruch 5, dadurch gekennzeichnet, daß das Federelement eine Zugstange (66) verstellbarer Länge ist.

7. Drehpositionierbare Anlage nach Anspruch 5, dadurch gekennzeichnet, daß als Federelemente auswechselbare Tellerfedern (74) vorgesehen sind.

8. Drehpositionierbare Anlage nach einem der Ansprüche 5 bis 7, gekennzeichnet durch die Kombination mit einem der Ansprüche 1 bis 4.

## Claims

1. A rotationally-positionable installation, more especially a wind energy installation, having a tower (1) and an equipment carrier (gondola 2) which is mounted thereon so as to be rotatable about the vertical axis thereof and which is rotationally-positionable by means of a drive unit (31), in which the drive unit includes shaft gearing (13, 19, 29) and the twoer, the equipment carrier and the drive unit form an oscillatory system having at least one inherent yaw frequency (rotary oscillations about the vertical axis) which is excited by a moment, acting variably on the equipment carrier, about the vertical axis, characterised in that, for adjusting the inherent yaw frequency, at least one gear shaft (29) having an adjustable torsional spring force is provided in such a way that the length of the shaft between power introduction and power removal is variable by mutual relative displaceability of the shaft (29) and a gearing element (pinion 19) arranged in a torsionally-fast manner thereon.

2. A rotationally-positionable installation according to claim 1, characterised in that the drive unit (31) is fastened to the equipment carrier (2) so as to be adjustable in height jointly with the gear shaft (29) and the gearing element (19) is fixedly mounted in the direction of the vertical axis on the equipment carrier (2) and is toothed so as to be displaceable with the gear shaft (29) in the axial direction of the shaft.

3. A rotationally-positionable installation, more especially a wind energy installation, having a tower (1) and an equipment carrier (gondola 2) which is mounted thereon so as to be rotatable about the vertical axis thereof and which is rotationally-positionable by means of a drive unit (31), in which the drive unit includes shaft gearing (40, 48) and the tower, the equipment carrier and the drive unit form an oscillatory system having at least one inherent yaw frequency (rotary oscillations about the vertical axis), which is excited by a moment, acting variably on the equipment carrier, about the vertical axis, characterised in that, for adjusting the inherent yaw frequency, at least one gear shaft (48) having an adjustable torsional spring force is provided, and that the shaft has two telescopically interlocking shaft parts (42, 46), at least one location (clamping ring 50) of mutual, torsionally-fast coupling of which, in the axial direction of the shaft, is selectable.

4. A rotationally-positionable installation according to claim 3, characterised in that the two shaft parts (42, 46) have different torsional stiffnesses and are connected in a torsionally fast manner to one another by at least one coupling element (50) which is arranged so as to be displaceable in the axial direction of the shaft.

5. A rotationally-positionable installation, more especially a wind energy installation, having a tower (1) and an equipment carrier (gondola 2) which is mounted thereon so as to be rotatable about the vertical axis thereof and which is rotationally-positionable by means of a drive unit (31), in which the tower, the equipment carrier and the drive unit form an oscillatory system having at least one inherent yaw frequency (rotary oscillations about the vertical axis), which is excited by a moment, acting variably on the equipment carrier, about the vertical axis, characterised in that for the adjustment of the inherent yaw frequency at least one power transmission element (housing 63) of the drive unit (31) is supported flexibly on the equipment carrier (2) or the tower (1) by way of at least one spring element (66, 74) of variably adjustable spring force in the direction of the force of reaction derived by way of the power transmission element.

6. A rotationally-positionable installation according to claim 5, chatacterised in that the spring element is a tension rod (66) of adjustable length.

7. A rotationally-positionable installation according to claim 5, chatacterised in that exchangeable cup springs (74) are provided as the spring elements.

8. A rotationally-positionable installation according to one of claims 5 to 7, characterised by the combination with one of claims 1 to 4.

## Revendications

1. Installation à position angulaire orientable, en particulier installation d'énergie éolienne, comprenant un pylône (1) et un support (nacelle 2) monté rotatif sur l'axe vertical de ce dernier et à position angulaire orientable au moyen d'une unité d'entraînement (31), l'unité d'entraînement étant munie d'une transmission à arbre (13, 19, 29) et le pylône, le support et l'unité d'entraînement formant un système oscillant présentant au moins une fréquence propre de lacets (vibrations tortionnelles autour de l'axe vertical) et excité par un moment engendré autour de l'axe vertical et agissant de façon variable sur le support, caractérisée par le fait que pour le réglage de la fréquence propre de lacets, il est prévu au moins un arbre de transmission (29) à dureté élastique à la torsion ajustable de manière que la longueur de l'arbre entre entre le point d'entrée et le point de sortie des forces puisse être modifiée par mobilité relative réciproque de l'arbre (29) et d'un élément de transmission (pignon 19) monté fixé en rotation dessus.

2. Installation à position angulaire orientable selon la revendication 1, caractérisée par le fait que l'unité d'entraînement (31) en liaison avec l'arbre de transmission (29) sont fixés de façon réglable en hauteur sur le support (2) et que l'élément de transmission (19) est monté fixe sur le support (2) dans le sens de l'axe vertical et est endenté avec l'arbre de transmission (29) de façon déplaçable dans le sens de l'axe de l'arbre.

3. Installation à position angulaire orientable, en particulier installation d'énergie éolienne, comprenant un pylône (1) et un support (nacelle 2) monté rotatif sur l'axe vertical de ce dernier et à position angulaire orientable au moyen d'une unité d'entraînement (31), l'unité d'entraînement étant munie d'une transmission à arbre (40, 48) et le pylône, le support et l'unité d'entraînement formant un système oscillant présentant au moins une fréquence propre de lacets (vibrations tortionnelles autour de l'axe vertical) et excité par un moment engendré autour de l'axe vertical et agissant de façon variable sur le support, caractérisée par le fait que pour le réglage de la fréquence propre de lacets, il est prévu au moins un arbre de transmission (48) à dureté élastique à la torsion ajustable de manière que l'arbre présente deux parties (42, 46) s'engageant l'une dans l'autre de façon télescopique et dont au moins un endroit (bague de serrage 50) d'accouplement réciproque fixé en rotation puisse être choisi dans le sens de l'axe de l'arbre.

4. Installation à position angulaire orientable selon la revendication 3, caractérisée par le fait ques les deux parties (42, 46) de l'arbre présentent différentes résistances à la torsion et sont mutuellement raccordées fixées en rotation par au moins un élément d'accouplement (50) monté déplaçable dans le sens de l'axe de l'arbre.

5. Installation à position angulaire orientable, en particulier installation d'énergie éolienne, comprenant un pylône (1) et un support (nacelle 2) monté rotatif sur l'axe vertical de ce dernier et à position angulaire orientable au moyen d'une unité d'entraînement (31), le pylône, le support et l'unité d'entraînement formant un système oscillant présentant au moins une fréquence propre de lacets (vibrations tortionnelles autour de l'axe vertical) et excité par un moment engendré autour de l'axe vertical et agissant de façon variable sur le support, caractérisée par le fait que pour le réglage de la fréquence propre de lacets, au moins un élément de transmission (carter 63) de l'unité d'entraînement (31) prend appui de façon flexible sur le support (2) ou le pylône (1) par l'intermédiaire d'au moins un élément élastique (66, 74) de dureté élastique ajustable dans le sens de la force de réaction dérivée par l'intermédiaire de l'élément de transmission.

6. Installation à position angulaire orientable selon la revendication 5, caractérisée par le fait que l'élément élastique est une tige de traction (66) de longueur réglable.

7. Installation à position angulaire orientable selon la revendication 5, caractérisée par le fait que comme élément élastique on prévoit des rondelles Belleville interchangeables (74).

8. Installation à position angulaire orientable selon l'une des revendications 5 à 7, caractérisée par la combinaison avec l'une des revendications 1 à 4.

Fig. 1

Fig. 2

Fig. 3

SCHNITT A-A

Fig.4